# EUROPEAN PATENT SPECIFICATION

(11) **EP 2 291 474 B1**
(45) Date of publication and mention of the grant of the patent: **07.12.2016**
(21) Application number: 09759147.3
(22) Date of filing: 01.06.2009
(51) Int. Cl.: C04B 26/02, C08L 33/08, C08L 35/06

(54) **DECORATIVE COMPOSITION AND METHOD OF USING IT**
DEKORATIVE ZUSAMMENSETZUNG UND VERWENDUNG DAVON
COMPOSITION DÉCORATIVE ET SON PROCÉDÉ D'UTILISATION

(30) Priority: 03.06.2008 US 132204
(43) Date of publication of application: 09.03.2011
(73) Proprietor: Knauf Gips KG, 97346 Iphofen (DE)
(72) Inventor: BURY, Rafael, Wheeling IL 60090 (US); LI, Donghong, Buffalo Groe IL 60089 (US)
(74) Representative: dompatent von Kreisler Selting Werner - Partnerschaft von Patent- und Rechtsanwälten mbB
(86) International application number: PCT/US2009/045780
(87) International publication number: WO 2009/148986

(56) References cited:
- EP-B1- 0 765 365
- KR-A- 20070 005 639
- US-A- 5 434 009
- US-A- 5 741 844
- US-A1- 2002 129 744
- US-A1- 2004 010 071
- US-A1- 2005 139 126
- US-A1- 2006 159 908

## Description

### BACKGROUND OF THE INVENTION

This invention relates to a decorative composition that is more water resistant and durable than joint compounds, and a method for using it.

Compositions such as plaster and joint compounds are well known in the building industry. They have many uses because they can be formed into almost any shape, can be sanded for a smooth surface, and accept decorative coverings such as paint or wallpaper. These compositions are relatively inexpensive and can be handled by a homeowner with success.

Plasters are made with calcium sulfate hemihydrate mixed with water to form a slurry. Water is adsorbed by the hemihydrate in a hydration reaction to form an interlocking matrix of calcium sulfate dihydrate, becoming hard and brittle. These materials have a very short working time. While the reaction is occurring, the viscosity and workability of the slurry is constantly changing due to the formation of various matrix or crystalline forms. The applicator must constantly vary the pressure needed to smooth the plaster. Once it dries, it is difficult to sand to form a smooth surface.

Two types of joint compounds are well-known, setting-type and drying-type. The setting-type joint compound relies on the setting action of a hydraulic component, such as stucco or calcium sulfate hemihydrate, to hold the joint compound together. As with plasters, the viscosity and workability of the setting-type joint compound vary during application. Setting-type joint compounds have the disadvantage that they are a two-component system of wet and the dry components that need to be mixed just prior to use. Once water is added, the hydration reactions begin, causing the joint compound to start to set. Water can be added in advance where a set retarder is used to delay onset of the hydration reactions. A set accelerator is then added at the time of use to initiate the setting reactions. Either water or the set accelerator is added to the setting-type joint compound just prior to use. Care is taken when adding set time modifiers, such as set accelerators or set retarders, as they can have large effects on workability and set time.

Drying-type joint compounds can be prepared in advance for use and rely on evaporation of the water and/or the coalescing of latex emulsions. However, they have the disadvantage of being less durable and more brittle than setting-type compositions. When wet, or even after drying, the resulting surface is susceptible to damage.

US 2006/0159908 discloses an acrylic latex coating comprising 39% calcium carbonate 0.83% clay 15.5% BASE ACRONAL 120, 2.0% TEXANOL, 16.1% water and no hydraulic components

Neither type of joint compound is sufficiently durable for forming textures or architectural details on walls or ceilings. Compositions used for this purpose are very strong, water-resistant and durable, and are shapeable, such as by troweling the pliable composition to form details. Thus a decorative composition that can not only be used in the formation and repair of walls, but also for imparting textures to a substrate is desirable.

### SUMMARY OF THE INVENTION

These and other desirable solutions are met or exceeded by the present decorative composition. Some embodiments of the composition include a first filler in amounts of at least 50% based on the total composition weight. A second filler is present and a humectant is optionally present. The embodiments of the decorative composition include a polymeric resin, a coalescent solvent and water. This composition is substantially free of stucco, cement or other hydraulic component where the setting action would act as the binder for the composition. In at least one embodiment of the invention, calcium carbonate is the first filler in the composition.

A method for preparing the decorative substrate includes obtaining the decorative composition and applying it to the substrate surface. The decorative composition is useful for constructing and repairing substrates such as interior walls, and is useful for creating decorative textures or architectural details.

The decorative composition is very durable and less brittle compared to other plasters and joint compounds. It can be shaped and sanded to a very smooth finish without chipping or crumbling. The compound accepts color for use with designer finishes. The decorative compound also has water-resistance and flexibility that are not found in conventional plasters or joint compounds.

Another property of the decorative composition is that it is self-priming. This allows the applicator to apply the decorative finish without having to prime the substrate first.

In addition, the decorative composition is more water-resistant than prior art decorative compositions. This means that the substrate surface can be washed if it should become soiled. It is also less likely to become damaged should the surface be exposed to water due to a leak or a spill.

The adaptability of the decorative composition allows an applicator to create unlimited colors and texture patterns for customization of interior walls or ceilings.

### DETAILED DESCRIPTION OF THE INVENTION

The decorative composition of this invention includes a first filler in amounts of at least 50% by weight based on the total weight of the composition. The composition also includes a second filler, a polymeric resin, a coalescent solvent, a thickener and water. Unless otherwise noted, amounts of the components in this composition are reported by weight based on the total composition weight. Optional ingredients include a humectant.

At least 50% by weight of the decorative composition is a first filler, such as calcium carbonate, limestone, gypsum, nepheline syenites, titanium dioxides, lithophones, wollastonites, bismuth oxychlorides , talc, clays and mixtures thereof.

Useful nepheline syenites are typically nodular particles. A suitable nepheline syenite is marketed under the trade mark MINEX® (e.g., MINEX® 3) (Unimin Corporation, New Caanan, CT). Other suitable first fillers include but are not limited to talc marketed under the MISTRON® trade mark including MISTRON® ZSC (Luzenac North America, Greenwood Village, CO); ground calcium carbonates marketed under the OMYACARB® trade mark including Snowwhite 21 and OMYACARB® 6-PT (Omya North America, Alpharetta, GA); calcined kaolin clays marketed under the HUBER® trade mark including HUBER® 70-C (Huber Engineered Materials, Atlanta, GA); hydrous aluminosilicates marketed under the trade mark ASP including ASP-400 (BASF Corporation, Florham Park, NJ); precipitated calcium carbonates available under the M-60 trade mark (Mississippi Lime Company, St. Louis, MO); and Micas are available under the trade mark P-80F (United States Gypsum Company, Chicago, IL).

Rutile titanium dioxide is generally preferred for use as a whitening and opacifying pigment, but anatase titanium dioxide and other opacifying pigments could be used. Useful titanium dioxides are available under the TI-PURE® (DuPont Company, Wilmington, DE), TIONA® (Millennium Chemicals, Maryland), TRONOX® (Tronox Incorporated, Oklahoma City, OK), and TIOXIDE® (Huntsman Pigments, England) trade marks. Suitable titanium dioxides include TIONA® 595 and TRONOX® CR821.

Some of the properties that the type of first filler brings to this invention include, but are not limited to, abrasion resistance, application rheology, washability, scrubability, hiding power, color, and tinting strength.

Particle size has some effect on the smoothness of the dried decorative composition. If the particle size is sufficiently large, the surface of the decorative compound will be less smooth than when smaller particle sizes are used. In the embodiments, the first filler particle size is in the range of from 0.2 microns to 250 microns. A preferred embodiment has the first filler with a particle size distribution of from 10 microns to 25 microns. Since talc has a much finer particle than calcium carbonate or limestone, the particle size distribution of talc would be expected to be lower, for example, up to 3 microns.

Amounts of the first filler range from 50% to 80%. A preferred embodiment includes from about 50% to 60% by weight of the first filler.

Another component of the decorative composition is a polymeric resin. In the embodiments, the polymeric resin is present in amounts of from 3% to 10% resin solids based on the weight of the composition. At least one preferred embodiment of the invention includes from 6% to 9% latex emulsion. In some embodiments, the latex is selected to be a film-forming polymer. Examples of the latex emulsion include, but are not limited to styrene/acrylic polymers, acrylic polymers, polyurethane polymers, vinyl/acrylic polymers and mixtures thereof.

The polymeric resin can be any suitable film-forming resin capable of forming a solid film or binding pigments. Suitable polymeric resins include, but are not limited to, latex emulsion media and oil-based media. In some embodiments, the polymeric resin is selected from vinyl acetates, such as ethylene vinyl acetate, and acrylics, such as vinyl acrylics and styrenated acrylics. Suitable oil-based media include carboxyl-and hydroxyl-functionalized acrylics, alkyds, polyurethanes, polyesters, and epoxies. Starches are not considered to be polymeric resins. Other polymeric resins that act as a binder as are known in the art are suitable for use as the polymeric resin. The initial solid composition typically includes from about 5 wt. % to about 40 wt % by weight of the composition.

Useful polymeric resins include acrylic polymers, vinyl acrylic polymers, for example, vinyl acetate-butyl acrylate copolymers, styrene acrylic polymers, and vinyl acetate polymers marketed under the UCAR® and NEOCAR® trade marks (The Dow Chemical Company, Midland, MI) such as UCAR® 367 brand latex adhesive; emulsion polymers products marketed under the VINREZ name (Halltech, Inc., Ontario, Canada); acrylic, vinyl acrylic, and styrene acrylic latex polymers marketed under the AQUAMAC® trade mark (Hexion Specialty Chemicals, Columbus, OH). An exemplary vinyl acrylic resin is VINREZ 663 V15, which has a glass temperature of about 18°C and an average mean particle size of about 0.35 microns. Another exemplary vinyl acrylic copolymer vehicle is marketed under product identification no. HP-31-496 (Halltech, Inc., Ontario), and has a glass transition temperature of about 0°C.

Suitable functionalized acrylics, alkyds, polyurethanes, polyesters, and epoxies are also useful as polymeric resins and can be obtained from a number of commercial sources. Useful acrylics are sold under the ACRYLOID® name (Rohm & Haas, Co., Philadelphia, PA); useful epoxy resins are sold under the EPON® name (Hexion Specialty Chemicals, Ohio); useful polyester resins are sold under the CYPLEX® trade mark (Cytec Industries, West Paterson, NJ); and useful vinyl resins are sold under the UCAR® name (The Dow Chemical Company, Midland, MI).

The coalescent solvent is another component of the decorative composition. If the polymeric resin is a latex resin, the coalescent solvent is selected to support film formation of the polymeric resin. The coalescent solvent is selected based on the glass transition temperature of the resin and the desired drying time to form the film. Exact selection of the coalescent solvent will therefore be determined by the type and amount of the polymeric resin used for a particular application. Another example of a coalescent solvent for use with styrene/acrylic polymers is TEXANOL® brand ester alcohol by Eastman Chemical Co., Kingsport, TN. Some embodiments include the coalescent solvent in an amount of from 1.5% to 3.5% by weight of the composition. Volatile content may limit the amount of coalescent solvent that can be used in certain areas, but it is anticipated that higher coalescent solvent content may be useful in areas having no ceiling on volatile materials.

Water is added to the composition in amounts sufficient to form a workable composition. The embodiments include water in amounts of at least 10% by weight. The composition is sufficiently thick to remain in place on a wall or ceiling until dry, and sufficiently thin to be applied. Particularly when the decorative composition is applied by hand with a hawk and trowel, the decorative composition should not be so viscous so as to unduly tire the applicator.

Viscosity of the decorative composition is adjusted with the optional thickener. The power of thickeners to effect viscosity changes in a composition varies widely. As stated above, in order to create texture on a substrate, such as an interior wall or ceiling, the decorative composition is sufficiently thick to stay in place on the wall until it dries. Some embodiments of the decorative composition include an amount of thickener to produce a Brabender Viscosity of 200-600 units. Suitable thickeners include, but are not limited to, cellulosic thickeners, gelling clays, associative thickeners or combinations thereof. At least some embodiments use hydroxyl methyl cellulose, marketed as NATROSOL® by Aqualon Co., Wilmington, DE. Other thickeners or viscosities may be suitable depending on the exact application. At least one preferred embodiment uses the thickener in amounts of 0.1% to 2% by weight based on the total weight of the composition.

Exemplary hydrophobic modified cellulosic thickeners include but are not limited to cellulose ethers having a molecular weight between about 1000 Daltons and 500,000 Daltons, for example, alkyl hydroxypropyl cellulose ethers, hydroxypropyl methyl celluloses, xanthan gums, carboxymethylcelluloses, hydroxyethylcelluloses, sodium alginates and other salts of alginic acid, carrageenans, gum arabic, gum tragacanth, gum ghatti, guar gum and its derivatives, locust bean gum, tamarind gum, psyllium seed gum, quince seed gum, larch gum, pectin and its derivatives, dextrans, and hydroxypropylcelluloses. The compound composition typically includes from 0.01 wt. % to 2 wt % of the cellulosic thickener.

The alkyl group of useful alkyl hydroxypropyl celluloses may contain up to 9 carbon atoms, but usually the alkyl group has from one to three atoms. Hydroxypropyl methyl celluloses having an average of two hydroxypropyl and/or methoxypropyl groups per anhydroglucose unit are often used. The viscosity of an aqueous solution having 2 wt.% of a suitable alkyl hydroxypropyl cellulose ether at 20°C is about 60,000 centipoises (cps) to 90,000 cps as measured with an Ubbelohde tube capillary viscometer. Alternatively, similar measurements can be made with a Brookfield rotational viscometer at a speed between 2.5 rpm and 5 rpm. In one refinement, the solid-colored coating composition includes 0.25 wt.% of an alkyl hydroxypropyl cellulose ether. Of course, other types of cellulosic thickeners may also be used, and a greater quantity may be needed if a lower viscosity thickener is used (or vice versa). Exemplary alkyl hydroxypropyl cellulose ethers are marketed under the METHOCEL® trade mark (The Dow Chemical Company, Midland, MI).

Suitable gelling clays for use in the coating compositions are hormite clays including natural and/or synthetic dimensionally layered sheet structures of tetrahedrally coordinated silica linked to parallel sheets of octahedrally coordinated alumina, magnesium oxide, silicates, and/or phyllosilicates. Such gelling clays include but are not limited to attapulgites, sepiolites, bentonites, laponites, nontronites, beidellites, laponites, yakhontovites, zincsilites, volkonskoites, hectorites, saponites, ferrosaponites, sauconites, swinefordites, pimelites, sobockites, stevensites, svinfordites, vermiculites, water-swellable synthetic clays, smectites, e.g., montmorillonites, particularly sodium montmorillonite, magnesium montmorillonite, and calcium montmorillonite, illites, mixed layered illite/smectite minerals such as rectorites, tarosovites, and ledikites, magnesium aluminum silicates, and admixtures of the clays named above. Palygorskite attapulgite clays are generally preferred. The decorative composition typically includes from 0.01 wt.% to 10 wt% of the gelling clay. Useful gelling clays include those marketed under the MIN-U-GEL® trade mark (Floridin Company, Quincy, FL), and those marketed under the ATTAGEL® trade mark (Engelhard Corporation, Iselin, NJ). Such clays are available in different particle sizes.

Suitable associative thickeners for use in the coating compositions include hydrophobically modified ethoxylated urethanes (HEUR), hydrophobically modified alkali-swellable emulsions (HASE), and styrene-maleic anhydride terpolymers (SMAT). HEUR thickeners (also generally known as polyurethane or PUR associative thickeners) are generally preferred in aqueous, latex-based compositions. Acidic acrylate copolymers (cross-linked) of ethyl acrylate and methacrylic acid, and acrylic terpolymers (cross-linked) of ethyl acrylate, methacrylic acid, and nonionic urethane surfactant monomer may also be used as associative thickeners. When one or more suitable associative thickeners are used, the thickening reaction is caused in part by either association between the associative thickener and at least one other particle of the compound composition (e.g., a pigment particle or resin particle) or another associative thickener molecule. In various embodiments, the solid-colored coating composition typically includes from 0.01 wt.% to 10 wt.% of the associative thickener. Useful associative thickeners include those marketed under the ALCOGUM® trade mark (Alco Chemical Company, Chattanooga, TN), the VISCALEX® trade mark (Ciba Specialty Chemicals,Tarrytown, NY), and the ACRYSOL® trade mark (Rohm & Haas, Philadelphia, PA).

A second filler is added to the decorative composition to vary the color or the consistency of the decorative composition. The second filler should be selected to reinforce the decorative composition and reduce cracking as the composition dries. At lease one embodiment uses mica as the filler. The second filler is selected from the group consisting of platy clays, talc, platy talc and fibers. Amounts of the second filler in the range of from 3% to 8%. Some embodiments use second fillers in amounts of from 3% to 6%.

Another optional component of the decorative composition is a biocide. When the decorative composition is prepared and used in a short amount of time, it is not necessary to utilize a biocide. However, microbes can flourish in an environment that is dark, moist and includes nutrients supplied by the polymeric resin and other materials. When packaged commercial products remain on a store shelf for weeks or months, it then becomes necessary to add a biocide to inhibit growth of bacteria and molds within the container. Any biocide can be used in this composition that is suitable for use in building panels, coatings or other products that are likely to come into contact with people or pets.

Products known for use as fungicides and/or in-can preservatives in aqueous systems are particularly useful in the decorative composition. MERGAL® 174 preservative (Troy Corp., Florham Park, NJ) is an example of an in-can preservative that is useful. Another example of a suitable biocide is a salt of pyrithione. Any water-soluble salt of pyrithione having antimicrobial properties is useful in the present composition. Pyrithione is known by several names, including 2 mercaptopyridine-N-oxide; 2-pyridinethiol-1-oxide (CAS Registry No. 1121-31-9); 1-hydroxypyridine-2-thione and 1 hydroxy-2(1H)-pyridinethione (CAS Registry No. 1121-30-8). The sodium derivative (C₅H₄NOSNa), known as sodium pyrithione (CAS Registry No. 3811-73-2), is one embodiment of this salt that is particularly useful. Pyrithione salts are commercially available from Arch Chemicals, Inc. of Norwalk, CT, such as Sodium OMADINE® or Zinc OMADINE® brand antimicrobial compounds. Other preferred biocides include diidomethyl-4-tolylsulfone; thiabendazole, tebuconazole, 3-iodo-2-propynyl butylcarbamate and combinations thereof. MERGAL® brand biocides (Troy Corp., Florham Park, NJ) are specific examples of a 3-iodo-2-propylyl butylcarbamate that are useful in the decorative composition. An example of a preferred fungicide is FUNGITROL® 920 brand antimicrobial agent from International Specialty Products, Inc., Wayne, NJ.

The amount of biocide used is in the range needed to prevent growth of microbes over the shelf life of the composition. When in-can preservatives are used as the biocide, amounts in the range of 0.1% to about 0.5% biocide are used. At least one preferred embodiment uses the biocide in amounts of from 0.05% to 0.2% based on the weight of the composition.

Humectants are preferably used in the coating compositions in order to slow the drying of the compound and provide a more consistent finish. They can also provide freeze thaw stability. Useful humectants include, but are not limited to, polyhydric alcohols. Examples of suitable polyhydric alcohols include glycols such as ethylene glycol, diethylene glycol (DEG), triethylene glycol, propylene glycol, tetraethylene glycol, and polyethylene glycols.

Micronized wax or wax emulsion is useful for improving surface properties to increase water-repellency, mar-resistance and scratch-resistance. Suitable waxes include modified paraffin wax, modified polyethylene waxes, and micronized PTFE.

The decorative composition is substantially free of hydraulic components. Setting reactions begin when hydraulic components are combined with water. If a ready-mixed composition is prepared and the hydration reactions are allowed to proceed, the composition would set within hours or days of its preparation. To extend the shelf life, either the water is withheld from the composition, or a set retarder is added to delay the setting reactions. Just prior to use, the set accelerator or the water would be mixed into the decorative composition, thereby diminishing the convenience of a ready-mix formulation. Further, the decorative composition has good drying and surface characteristics without the addition of any hydraulic component.

A method of preparing a decorative substrate includes obtaining a decorative composition that includes the first and second fillers, the polymeric resin, the coalescent solvent for film-formation of the polymeric resin, the thickener, and the water. The decorative composition is optionally obtained by assembling amounts of the first and second fillers, the polymeric resin, the coalescent solvent, and the water and mixing the assembled ingredients to form a putty-like composition.

In at least one preferred embodiment, the liquid components, including the polymeric resin, the biocide and the coalescent solvent are added to the water and mixed together. Dry components are also blended together, then combined with the liquid components. The initial viscosity is targeted to be slightly higher than that desired in the final product.

At least three factors are used to select the exact components and the relative amounts in making the decorative composition. Viscosity of the decorative composition is one factor considered, as discussed above. Drying time within desired parameters is a second factor that is considered. At least one preferred embodiment is dry to the touch in 45-50 minutes. Other drying times are contemplated, however this drying time is optimal for allowing the application of a sealer or paint within a relatively short period of time after application of the decorative composition.

The third factor to be considered is the density of the decorative composition. The composition should be no heavier than necessary lest the weight of it tire the applicator after applying only a small amount of material. At least one embodiment of the decorative composition has a density of 1.50 to 1.68 kg/dm³ (12.5 to 14 pounds/gal).

The decorative composition is applied to a substrate. The decorative composition is applied by any suitable method using any suitable tool. In at least one embodiment, it is applied using a trowel and hawk. Trowels are available that are suitable to create either smooth or textured surfaces on a substrate.

After the decorative composition is applied it is allowed to dry. If desirable, the dried decorative composition is sanded or finished to refine the surface.

### Example 1

A decorative compound composition was prepared including a first and second filler, and a polymeric resin.

The quantities of raw materials shown in Table 1 were mixed in the order shown to produce a decorative composition as a deep-tone base for tinting purpose. The composition weighed 1.63 to 1.65 kg/dm³ (13.6 to 13.8 pounds per gallon), and contained 67 wt.% to 70 wt.% solids. The decorative compound composition had a viscosity of about 300-400 Brabender Units.

**TABLE 1**

| Raw Material | Chemical Function | Weight Pounds | Percent |
|---|---|---|---|
| Water | Medium | 307.3 | 22.37% |
| Acronal 296D | Polymeric Resin | 188.7 | 13.74% |
| ATTAGEL B | Gelling Clay (Thickener) | 19.9 | 1.45% |
| Natrosol 250HXR | Thickener | 6.0 | 0.44% |
| Marblewhite 325 | Calcium Carbonate (First Filler) | 744.8 | 54.21% |
| Mica P-80F | Base filler (second filler) | 74.5 | 5.42% |
| FUNGITROL® 920 | Biocide - Fungicide | 6.9 | 0.50% |
| TROYSAN^{®} 174 | Biocide - Bactericide | 4.0 | 0.29% |
| Ethylene glycol | Anti-freeze solvent/Humectant | 15.4 | 1.12% |
| Texanol | Coalescing solvent | 6.3 | 0.46% |
| | Total | 1373.8 | 100.00% |

### Example 2

A decorative compound composition was prepared including an opacifying pigment, first and second filler, and a polymeric resin.

The quantities of raw materials shown in Table 2 were mixed in the order shown to produce a decorative composition as a white base for tinting purpose. The composition weighed 1.73 to 1.75 kg/dm³ (14.4 to 14.6 pounds per gallon), and contained 70 wt.% to 73 wt.% solids. The decorative compound composition had a viscosity of about 350-450 Brabender Units.

**TABLE 2**

| Raw Material | Chemical Function | Weight Pounds | Percent |
|---|---|---|---|
| Water | Medium | 281.4 | 19.33% |
| Acronal 296D | Polymeric Resin | 201.8 | 13.86% |
| ATTAGEL B | Gelling Clay (Thickener) | 20.6 | 1.42% |
| Natrosol 250 HXR | Thickener | 5.2 | 0.36% |
| Tioxide TR-93 | Opacifying pigment | 72.0 | 4.95% |
| Marblewhite 325 | Calcium Carbonate (First Filler) | 771.9 | 53.03% |
| Mica P-80F | Base filler (Second filler) | 77.2 | 5.30% |
| FUNGITROL^{®} 920 | Biocide - Fungicide | 1.8 | 0.12% |
| TROYSAN^{®} 174 | Biocide - Bactericide | 1.8 | 0.12% |
| Ethylene glycol | Anti-freeze solvent/Humectant | 15.5 | 1.06% |
| Texanol | Coalescing solvent | 6.3 | 0.43% |
| | Total | 1455.5 | 100.00% |

While a particular embodiment of the decorative composition has been shown and described, it will be appreciated by those skilled in the art that changes and modifications may be made thereto without departing from the invention as set forth in the following claims.

## Claims

1. A decorative composition comprising:
a first filler in an amount of 50% to 80% by weight, wherein said filler has a particle size of from 0,2 microns to 250 microns;
a second filler selected from the group consisting of platey clays, talc, platey talc and fibers in amounts of 3% to 8% by weight of the composition;
a polymeric resin in amounts of 3% to 10% resin solids based on the weight of the composition;
a coalescent solvent for film-formation of said polymeric resin; and
water in amounts of at least 10% by weight,
wherein said decorative composition is free of hydraulic components.

2. The decorative composition of claim 1 further comprising a biocide.

3. The decorative composition according to any one of claims 1 to 2, wherein said first filler is present in amounts of from 50% to 70% by weight of the composition.

4. The decorative composition according to any one of claims 1 to 3, wherein said polymeric resin comprises one of the group consisting of an acrylic latex emulsion, a vinyl/acrylic latex emulsion, a styrene/acrylic latex emulsion, a polyurethane and
mixtures thereof.

5. The decorative composition according to any one of claims 1 to 4, further comprising a humectant.

6. The decorative composition according to any one of claims 1 to 5, wherein said coalescent solvent is present in amounts of from 1 % to 5% by weight of the composition.

7. The decorative composition according to any one of claims 1 to 6 further comprising a thickener.

8. The decorative composition of claim 7, wherein said thickener is present in amounts from 0.05% to 0.5% by weight of the composition.

9. The decorative composition according to any one of claims 1 to 8, wherein said water is present in amounts of from 15% to 30% by weight of the composition.

10. The decorative composition of claim 1, consisting essentially of:
the first filler, this first filler consisting of calcium carbonate in an amount of at least 50% by weight;
the polymeric resin;
the coalescent solvent for film formation of said polymeric resin;
water in amounts of 10% to 25% by weight;
a biocide;
the second filler; and
a thickener.

11. A method of preparing a decorative substrate, comprising:
obtaining the decorative composition according to any one of claims 1 to 10; and
applying the decorative composition to a substrate.

12. The method of claim 11 wherein said obtaining step further comprises assembling amounts of the first filler, the polymeric resin, the coalescent solvent, the thickener and the water;
and mixing the assembled ingredients to form a putty-like composition.

## Patentansprüche

1. Dekorative Zusammensetzung, umfassend:
einen ersten Füllstoff in einer Menge von 50 bis 80 Gew.-%, wobei der Füllstoff eine Teilchengröße von 0,2 µm bis 250 µm aufweist;
einen zweiten Füllstoff, der aus der Gruppe ausgewählt ist, die aus blättrigen Tonen, Talk, blättrigem Talk und Fasern in Mengen von 3 bis 8 Gew.-% der Zusammensetzung besteht;
ein polymeres Harz in Mengen von 3% bis 10% Harzfeststoffe, bezogen auf das Gewicht der Zusammensetzung;
ein Koaleszenzlösungsmittel für die Filmbildung des polymeren Harzes;
und
Wasser in Mengen von wenigstens 10 Gew.-%;
wobei die dekorative Zusammensetzung frei von hydraulischen Komponenten ist.

2. Dekorative Zusammensetzung gemäß Anspruch 1, die weiterhin ein Biozid umfasst.

3. Dekorative Zusammensetzung gemäß einem der Ansprüche 1 bis 2, wobei der erste Füllstoff in Mengen von 50 bis 70 Gew.-% der Zusammensetzung vorhanden ist.

4. Dekorative Zusammensetzung gemäß einem der Ansprüche 1 bis 3, wobei das polymere Harz eines aus der Gruppe umfasst, die aus einer Acryl-Latexemulsion, einer Vinyl/Acryl-Latexemulsion, einer Styrol/Acryl-Latexemulsion, einem Polyurethan und Gemischen davon besteht.

5. Dekorative Zusammensetzung gemäß einem der Ansprüche 1 bis 4, die weiterhin ein Feuchthaltemittel umfasst.

6. Dekorative Zusammensetzung gemäß einem der Ansprüche 1 bis 5, wobei das Koaleszenzlösungsmittel in Mengen von 1 bis 5 Gew.-% der Zusammensetzung vorhanden ist.

7. Dekorative Zusammensetzung gemäß einem der Ansprüche 1 bis 6, die weiterhin ein Verdickungsmittel umfasst.

8. Dekorative Zusammensetzung gemäß Anspruch 7, wobei das Verdickungsmittel in Mengen von 0,05 bis 0,5 Gew.-% der Zusammensetzung vorhanden ist.

9. Dekorative Zusammensetzung gemäß einem der Ansprüche 1 bis 8, wobei das Wasser in Mengen von 15 bis 30 Gew.-% der Zusammensetzung vorhanden ist.

10. Dekorative Zusammensetzung gemäß Anspruch 1, im Wesentlichen bestehend aus:
dem ersten Füllstoff, wobei dieser erste Füllstoff aus Calciumcarbonat in einer Menge von wenigstens 50 Gew.-% besteht;
dem polymeren Harz;
dem Koaleszenzlösungsmittel für die Filmbildung des polymeren Harzes;
Wasser in Mengen von 10 bis 25 Gew.-%;
einem Biozid;
dem zweiten Füllstoff; und
ein Verdickungsmittel.

11. Verfahren zur Herstellung eines dekorativen Substrats, umfassend:
Herstellen der dekorativen Zusammensetzung gemäß einem der Ansprüche 1 bis 10; und
Auftragen der dekorativen Zusammensetzung auf ein Substrat.

12. Verfahren gemäß Anspruch 11, wobei der Schritt des Herstellens weiterhin das Zusammenstellen von Mengen des ersten Füllstoffs, des polymeren Harzes, des Koaleszenzlösungsmittels, des Verdickungsmittels und des Wassers sowie des Mischens der zusammengestellten Bestandteile unter Bildung einer spachtelartigen Zusammensetzung umfasst.

## Revendications

1. Composition décorative comprenant :
une première charge dans une quantité de 50 % à 80 % en poids, ladite charge ayant une taille de particule de 0,2 micron à 250 microns ;
une seconde charge choisie dans le groupe consistant en des argiles en plaques, du talc, du talc en plaques et des fibres dans des quantités de 3 % à 8 % en poids de la composition ;
une résine polymérique dans des quantités de 3 % à 10 % de solides de résine par rapport au poids de la composition ;
un solvant coalescent pour la formation de film de ladite résine polymérique ; et
de l'eau dans des quantités d'au moins 10 % en poids,
dans laquelle ladite composition décorative est exempte de composants hydrauliques.

2. Composition décorative selon la revendication 1, comprenant en outre un biocide.

3. Composition décorative selon l'une quelconque des revendications 1 à 2, dans laquelle ladite charge est présente dans des quantités de 50 % à 70 % en poids de la composition.

4. Composition décorative selon l'une quelconque des revendications 1 à 3, dans laquelle ladite résine polymérique comprend un élément du groupe consistant en une émulsion de latex acrylique, une émulsion de latex vinyle/acrylique, une émulsion de latex styrène/acrylique, un poly(uréthane) et leurs mélanges.

5. Composition décorative selon l'une quelconque des revendications 1 à 4, comprenant en outre un humectant.

6. Composition décorative selon l'une quelconque des revendications 1 à 5, dans laquelle ledit solvant coalescent est présent dans des quantités de 1 % à 5 % en poids de la composition.

7. Composition décorative selon l'une quelconque des revendications 1 à 6, comprenant en outre un épaississant.

8. Composition décorative selon la revendication 7, dans laquelle ledit épaississant est présent dans des quantités de 0,05 % à 0,5 % en poids de la composition.

9. Composition décorative selon l'une quelconque des revendications 1 à 8, dans laquelle ladite eau est présente dans des quantités de 15 % à 30 % en poids de la composition.

10. Composition décorative selon la revendication 1, consistant essentiellement en :
la première charge, cette première charge consistant en du carbonate de calcium dans une quantité d'au moins 50 % en poids ;
la résine polymérique ;
le solvant coalescent pour la formation de film de ladite résine polymérique ;
de l'eau dans des quantités de 10 % à 25 % en poids ;
un biocide ;
la seconde charge ; et
un épaississant.

11. Procédé de préparation d'un substrat décoratif comprenant :
l'obtention de la composition décorative selon l'une quelconque des revendications 1 à 10 ; et
l'application de la composition décorative à un substrat.

12. Procédé selon la revendication 11, dans laquelle ladite étape d'obtention comprend en outre l'assemblage de quantités de la première charge, de la résine polymérique, du solvant coalescent, de l'épaississant et de l'eau ; et le mélange des ingrédients assemblés pour former une composition semblable à du mastic.
